# EUROPÄISCHE PATENTSCHRIFT

(11) **EP 3 257 232 B1**
(45) Veröffentlichungstag und Bekanntmachung des Hinweises auf die Patenterteilung: **20.01.2021**
(21) Anmeldenummer: 16705456.8
(22) Anmeldetag: 05.02.2016
(51) Int. Cl.: H04L 29/08, H04L 29/06, G06F 17/40

(54) **VERFAHREN ZUR NUTZUNG EINES STEUERGERÄTES IN UNTERSCHIEDLICHEN DATENÜBERTRAGUNGSSYSTEMEN, STEUERGERÄT UND DATENÜBERTRAGUNGSSYSTEM ZUR DURCHFÜHRUNG EINES DERARTIGEN VERFAHRENS**
METHOD FOR USING A CONTROL DEVICE IN DIFFERENT DATA TRANSMISSION SYSTEMS, CONTROL DEVICE, AND DATA TRANSMISSION SYSTEM FOR PERFORMING SUCH A METHOD
PROCÉDÉ POUR EXPLOITER UN APPAREIL DE COMMANDE DANS DIFFÉRENTS SYSTÈMES DE TRANSMISSION DE DONNÉES, APPAREIL DE COMMANDE ET SYSTÈME DE TRANSMISSION DE DONNÉES POUR RÉALISER UN TEL PROCÉDÉ

(30) Priorität: 13.02.2015 DE 102015202666
(43) Veröffentlichungstag der Anmeldung: 20.12.2017
(73) Patentinhaber: Bayerische Motoren Werke Aktiengesellschaft, 80809 München (DE)
(72) Erfinder: GUNNARSSON, Dan, 81675 München (DE); KUNTZ, Matthias, 81927 München (DE); BEYER, Bernhard, 80992 München (DE)
(86) Internationale Anmeldenummer: PCT/EP2016/052479
(87) Internationale Veröffentlichungsnummer: WO 2016/128312

(56) Entgegenhaltungen:
- DE-A1-102004 059 981
- DE-A1-102011 102 770
- KR-B1- 100 792 422

## Beschreibung

Die Erfindung betrifft ein Verfahren zur Nutzung eines Steuergerätes in unterschiedlichen Datenübertragungssystemen, insbesondere in unterschiedlichen Datenübertragungssystemen in Fahrzeugen. Daneben betrifft die Erfindung ein Steuergerät zur Nutzung in unterschiedlichen Datenübertragungssystemen, insbesondere in unterschiedlichen Datenübertragungssystemen in Fahrzeugen. Außerdem betrifft die Erfindung ein Datenübertragungssystem und ein Fahrzeug, umfassend ein Steuergerät und/oder ein Datenübertragungssystem zur Nutzung eines Steuergeräts.

Im KFZ-Bereich werden Steuergeräte in vielen elektronischen Bereichen eingesetzt. Hierbei werden Steuergeräte in den Fahrzeugen über verschiedene Systembusse miteinander verbunden. Steuergeräte tauschen darüber systemweit beispielsweise Informationen über die Betriebszustände und weitere relevante Daten im Fahrzeug aus.

Bislang werden Steuergeräte meist für ein sehr spezielles Umfeld bzw. für ein sehr spezielles Datenübertragungssystem entwickelt. Dieses spezielle Umfeld/Datenübertragungssystem kann ein konkreter Fahrzeugtyp oder auch eine konkrete Produktlinie sein. Hierbei ist es denkbar, dass Steuergeräte für eine einzige Ausstattungsvariante eines Fahrzeuges entwickelt werden. Sofern derartige Steuergeräte mit unveränderter Funktionalität in einem anderen, neuen oder zusätzlichen Fahrzeug bzw. Umfeld eingesetzt werden sollen, führt dies dazu, dass jeweils eine weitere Version des Steuergerätes, das speziell für diese andere, neue oder zusätzliche Aufgabe konfiguriert ist, entwickelt werden muss. Prinzipiell haben derartige Steuergeräte zwar dieselben Funktionen, sind jedoch auf der Datenübertragungsebene inkompatibel.

Demnach werden Steuergeräte bislang jeweils für ein spezielles Datenübertragungssystem, wobei ein Datenübertragungssystem ein Verbund aus miteinander kommunizierenden Steuergeräten mit wenigstens einem Bussystem ist, entwickelt und vorgesehen.

In DE 10 2011 102 770 A1 wird ein Steuergerät und ein Verfahren zur Herstellung eines busangepassten Steuergeräts offenbart. Das Steuergerät weist eine Vorhaltung für einen Transceiver auf, der in Abhängigkeit des in einem Fahrzeug vorhandenen Bussystems manuell auszuwählen und entsprechend im Steuergerät zu verbauen ist.

In DE 10 2004 059 981 A1 wird hingegen ein Steuergerät beschrieben, dass dazu dient, dass mindestens zwei Steuergeräte von mindestens zwei gleichartigen und/oder unterschiedlichen Kommunikationsnetzen miteinander kommunizieren. Das in DE 10 2004 059 981 A1 beschriebene Verfahren beruht darauf, dass kommunikationsprotokollspezifische Botschaften in kommunikationsprotokollspezifische Daten sowie in Nutzdaten unterteilt werden und daraus generische Nachrichten gebildet werden.

Ausgehend von diesem Stand der Technik ist es Aufgabe der vorliegenden Erfindung, ein Verfahren zur Nutzung eines Steuergerätes in unterschiedlichen Datenübertragungssystemen, insbesondere in unterschiedlichen Datenübertragungssystemen in Fahrzeugen, bereitzustellen. Insbesondere ist es Aufgabe der vorliegenden Erfindung, die Anzahl der zu konfigurierenden Steuergeräte für unterschiedliche Datenübertragungssysteme zu verringern.

Des Weiteren ist es Aufgabe der vorliegenden Erfindung, ein entsprechend weiterentwickeltes Steuergerät sowie ein Datenübertragungssystem zur Durchführung eines derartig weiterentwickelten Verfahrens anzugeben.

Die Aufgabe der vorliegenden Erfindung wird durch das Verfahren zur Nutzung eines Steuergerätes in unterschiedlichen Datenübertragungssystemen, insbesondere in unterschiedlichen Datenübertragungssystemen in Fahrzeugen, gemäß dem Anspruch 1 gelöst.

In anderen Worten wird ein Verfahren zur Nutzung eines einzigen Steuergerätes in unterschiedlichen Datenübertragungssystemen bereitgestellt. Als Datenübertragungssystem ist ein Verbund mit mindestens einem Steuergerät, vorzugsweise mehreren Steuergeräten, mit mindestens einem Bussystem zu verstehen.

In Abhängigkeit von verschiedenen Fahrzeugtypen oder Ausstattungsvarianten verschiedener Fahrzeugtypen existieren demnach zahlreiche Datenübertragungssysteme. Das erfindungsgemäße Verfahren sieht vor, dass ein Steuergerät derart ausgebildet und verwendet wird, dass dieses Steuergerät in unterschiedlichen Datenübertragungssystemen genutzt werden kann. Hierzu umfasst das Steuergerät eine Datenbank, in der eine Menge von Konfigurationsdatensätzen abgelegt ist. Ein Konfigurationsdatensatz ist demnach für die Nutzung eines Steuergerätes in einem bestimmten Datenübertragungssystem bereitgestellt. Je mehr Konfigurationsdatensätze in der Datenbank des Steuergeräts hinterlegt sind, desto mehr Nutzungsmöglichkeiten ergeben sich für das Steuergerät. Mit anderen Worten kann das Steuergerät mit steigender Anzahl abgelegter Konfigurationsdatensätze in einer höheren Anzahl von Datenübertragungssystemen genutzt werden.

Das erfindungsgemäße Verfahren sieht zunächst vor, dass das Steuergerät mit einem aus einer Vielzahl von Datenübertragungssystemen ausgewählten Datenübertragungssystem verbunden wird und anschließend gestartet bzw. aufgestartet wird. Das Verbinden eines Steuergeräts mit einem Datenübertragungssystem, insbesondere mit einem Bussystem des Datenübertragungssystems erfolgt beispielsweise mittels einer Steckverbindung.

Anschließend wird gemäß Schritt b) eine Datenübertragung zwischen dem ausgewählten Datenübertragungssystem und dem Steuergerät durch Initialisieren eines Konfigurationsdatensatzes aus der Menge von Konfigurationsdatensätzen hergestellt. Mit anderen Worten wird das Steuergerät in einer Konfiguration gestartet, so dass eine Datenübertragung zwischen dem Steuergerät und dem ausgewählten Datenübertragungssystem ermöglicht wird. Das Initialisieren eines Konfigurationsdatensatzes aus der Menge von Konfigurationsdatensätzen beschreibt demnach den Betrieb des Steuergerätes mittels eines Konfigurationsdatensatzes bzw. mittels einer ausgewählten Konfiguration.

Im Schritt c) erfolgt ein Überprüfen des initialisierten Konfigurationsdatensatzes, wobei das Steuergerät Validierungsdaten des ausgewählten Datenübertragungssystems empfängt und mit zuvor bestimmten und in einem Speicher des Steuergerätes abgelegten datenübertragungssystem-spezifischen Validierungsdaten vergleicht. Im Schritt c) wird geprüft, ob der initialisierte Konfigurationsdatensatz für die Nutzung des Steuergerätes in dem ausgewählten Datenübertragungssystem ausgelegt ist. Hierzu sendet das Datenübertragungssystem Validierungsdaten an das Steuergerät, das die empfangenen Validierungsdaten mit in einem Speicher abgelegten bzw. gespeicherten datenübertragungssystem-spezifischen Validierungsdaten vergleicht. Die datenübertragungssystem-spezifischen Validierungsdaten können beispielsweise in der bereits beschriebenen Datenbank abgelegt sein. Auch ein Ablegen der datenübertragungssystem-spezifischen Validierungsdaten in einem zusätzlichen Speicher des Steuergerätes ist denkbar.

Die datenübertragungssystem-spezifischen Validierungsdaten werden von zuvor bestimmten Kodierdaten umfasst. Mit anderen Worten sind die datenübertragungssystem-spezifischen Validierungsdaten Teildaten von zuvor bestimmten Kodierdaten. Als Kodierdaten sind derartige Daten zu verstehen, die das Steuergerät vor der Nutzung in einem Datenübertragungssystem kodieren. Die Kodierung bezweckt beispielsweise die Aktivierung bzw. Bestimmung des für das ausgewählte Datenübertragungssystem passenden Konfigurationsdatensatzes. Die Kodierdaten können außerdem Auswahldaten zur Auswahl eines Bestimmungs-Konfigurationsdatensatzes aus der Menge von Konfigurationsdatensätzen umfassen.

Als Bestimmungs-Konfigurationsdatensatz ist derjenige Konfigurationsdatensatz zu verstehen, der speziell für die Nutzung des Steuergerätes in einem ausgewählten Datenübertragungssystem passend bzw. zweckmäßig ist. Mit anderen Worten werden in dem Steuergerät mehrere Konfigurationen vorgehalten, wobei beispielsweise über die Bestimmung von Kodierdaten die jeweils passende Konfiguration in Abhängigkeit von dem ausgewählten Datenübertragungssystem bestimmt bzw. ausgewählt wird.

Es kann vorgesehen sein, dass im Schritt b), d.h. bei der Herstellung einer Datenübertragung zwischen dem ausgewählten Datenübertragungssystem und dem Steuergerät der Bestimmungs-Konfigurationsdatensatz initialisiert wird. Mit anderen Worten wird das Steuergerät gestartet und anschließend eine Datenübertragung zwischen dem gestarteten Steuergerät und dem ausgewählten Datenübertragungssystem durch Initialisierung bzw. Inbetriebnahme des Bestimmungs-Konfigurationsdatensatzes und der zugehörigen Konfiguration hergestellt.

Alternativ ist es denkbar, dass in Schritt b) ein, von der Menge von Konfigurationsdatensätzen umfasster, Minimal-Konfigurationsdatensatz initialisiert wird. Mit Hilfe des Minimal-Konfigurationsdatensatzes und dem Initialisieren des Minimal-Konfigurationsdatensatzes kann das Steuergerät in einem derartigen Konfigurationsmodus betrieben werden, dass beispielsweise die Fähigkeit zur Diagnose-Kommunikation erhalten bleibt. Mit anderen Worten ist es also denkbar, dass nach dem Starten des Steuergerätes (Schritt a) die Datenübertragung zwischen dem Steuergerät und dem Datenübertragungssystem durch Initialisieren bzw. Inbetriebnahme des Minimal-Konfigurationsdatensatzes erfolgt.

Es kann vorgesehen sein, dass das ausgewählte Datenübertragungssystem im Schritt c) die Fahrgestellnummer des Fahrzeugs an das Steuergerät sendet. Die Fahrgestellnummer dient in diesem Zusammenhang als von dem ausgewählten Datenübertragungssystem gesendete Validierungsdaten. Sofern das erfindungsgemäße Verfahren zur Nutzung eines Steuergerätes die Nutzung eines Steuergerätes in unterschiedlichen Datenübertragungssystemen in Fahrzeugen betrifft, eignet sich die Fahrgestellnummer eines Fahrzeugs als besonders einfaches Mittel zur Validierung.

In einer weiteren Ausführungsform der Erfindung ist es denkbar, dass jedes Datenübertragungssystem sein eindeutiges Kriterium aufweist und somit eindeutige Validierungsdaten aussenden kann.

Das Bestimmen und Ablegen von/der Kodierdaten erfolgt vorzugsweise vor dem Schritt a), insbesondere vor dem Verbinden des Steuergeräts mit dem ausgewählten Datenübertragungssystem oder durch das Verbinden des Steuergeräts mit dem ausgewählten Datenübertragungssystem. Mit anderen Worten werden die bestimmten bzw. ausgewählten Kodierdaten zu einem Zeitpunkt im Steuergerät, insbesondere in einem Speicher des Steuergeräts, abgelegt, in dem das Steuergerät noch nicht mit dem ausgewählten Datenübertragungssystem verbunden ist.

Sofern die Kodierdaten vor dem Verbinden des Steuergeräts mit dem ausgewählten Datenübertragungssystem im Steuergerät abgelegt werden sollen, kann dies durch eine Datenübertragung zwischen dem Steuergerät und einem Kodiergerät oder einem Wartungsgerät erfolgen. Bei einem Bestimmen und Ablegen der Kodierdaten durch das Verbinden des Steuergeräts mit dem ausgewählten Datenübertragungssystem kann dies durch eine bekannte Steckerkodierung erfolgen. Mit anderen Worten erfolgt das Bestimmen und Ablegen der/von Kodierdaten durch das Anstecken des Steuergeräts an beispielsweise ein Bussystem des Datenübertragungssystems.

Nach dem Durchführen des Schrittes c), also dem Überprüfen des initialisierten Konfigurationsdatensatzes werden folgende zusätzliche Schritte durchgeführt:
d) Validieren des initialisierten Konfigurationsdatensatzes, insbesondere des initialisierten Bestimmungs-Konfigurationsdatensatzes, wenn im Schritt c) ein Übereinstimmen der empfangenen Validierungsdaten mit den datenübertragungssystem-spezifischen Validierungsdaten festgestellt wird.

Mit anderen Worten wird der initialisierte Konfigurationsdatensatz, insbesondere der initialisierte Bestimmungs-Konfigurationsdatensatz, validiert, wenn die empfangenen Validierungsdaten mit den abgelegten datenübertragungssystem-spezifischen Validierungsdaten übereinstimmen. Wenn das Datenübertragungssystem beispielsweise eine Fahrgestellnummer an das Steuergerät sendet und diese Fahrgestellnummer mit der im Steuergerät abgelegten Fahrgestellnummer übereinstimmt, wird daraus gefolgert, dass es sich bei dem initialisierten Konfigurationsdatensatz um den Bestimmungs-Konfigurationsdatensatz handelt und die gewählte Konfiguration tatsächlich für das passende Datenübertragungssystem ausgewählt wurde.

In einem weiteren Schritt wird
e) ein Minimal-Konfigurationsdatensatz in einem, insbesondere nichtflüchtigen, Speicher des Steuergeräts abgelegt wird und der Minimal-Konfigurationsdatensatz als zu initialisierender Konfigurationsdatensatz definiert wird.

Der Schritt e) wird erfindungsgemäß dann durchgeführt, wenn: im Schritt c) ein Unterschied zwischen den empfangenen Validierungsdaten und den datenübertragungssystem-spezifischen Validierungsdaten festgestellt wird.

Der Schritt e) kann zusätzlich dann durchgeführt werden, wenn:
- Schritt c) nicht innerhalb einer zuvor bestimmten Zeitdauer durchgeführt wird, d.h. ein Timeout bei der Überprüfung des initialisierten Konfigurationsdatensatzes auftritt und/oder
- die Datenbank des Steuergeräts beschädigt ist und/oder
- die datenübertragungssystem-spezifischen Validierungsdaten nicht erkannt werden können.

Bei den beschriebenen Möglichkeiten, die das Ablegen des Minimal-Konfigurationsdatensatzes in einem Speicher des Steuergerätes hervorrufen, handelt es sich somit sowohl um Fehlerfälle, als auch um ein aktives Erkennen eines Unterschieds zwischen den empfangenen Validierungsdaten und den datenübertragungssystem-spezifischen Validierungsdaten.

Beim Initialisieren edes Minimal-Konfigurationsdatensatzes bzw. beim Inbetriebnehmen eines Minimal-Konfigurationsdatensatzes, wird ein Minimal-Datenübertragungsmodus des Steuergerätes gestartet, wobei im Minimal-Datenübertragungsmodus eine Diagnose-Datenübertragung und/oder eine Ausgabe einer Fehlermeldung erfolgt. Das Initialisieren eines/des Minimal-Konfigurationsdatensatzes stellt eine konfigurationsübergreifende Rückfallebene (Minimal-Schedule) dar. Durch Starten eines Minimal-Datenübertragungsmodus des Steuergerätes kann beispielsweise die Fähigkeit zur Diagnose-Kommunikation bzw. Diagnose-Datenübertragung erhalten bleiben.

Die Minimal-Vorgabe im Zusammenhang mit einem Minimal-Datenübertragungsmodus ist es, dass inkompatible Datenübertragung zwischen dem Steuergerät und dem Datenübertragungssystem verhindert wird. Zusätzlich ist es denkbar, dass der Minimal-Datenübertragungsmodus die Aufrechterhaltung einer Grundfunktionalität des Steuergerätes bewirkt.

Im einfachsten Fall ist die Minimal-Anforderung an ein Steuergerät das im Minimal-Datenübertragungsmodus betrieben wird, dass eine Datenübertragung innerhalb des Datenübertragungssystems derart erfolgt, als ob das Steuergerät nicht verbaut wäre. Sofern der Minimal-Datenübertragungsmodus auch eine Diagnose-Datenübertragung gewährleistet, kann das Steuergerät in diesem Minimal-Datenübertragungsmodus beispielsweise auch mit neu bestimmten Kodierdaten versehen werden. Das heißt, im Steuergerät können während des Minimal-Datenübertragungsmodus neue Kodierdaten abgelegt werden.

In einer Ausführungsform der Erfindung ist es denkbar, dass die Schritte a) bis c), insbesondere die Schritte b) bis c), insbesondere der Schritt c), nach dem Durchführen des Schrittes e), also nach dem Ablegen eines/des Minimal-Konfigurationsdatensatzes in einem Speicher des Steuergerätes und Definieren des Minimal-Konfigurationsdatensatzes als zu initialisierendem Konfigurationsdatensatz, wiederholt werden.

Die Wiederholung der Schritte a) bis c), insbesondere der Schritte b) bis c), insbesondere des Schrittes c) kann solange erfolgen, bis beispielsweise ein ursprünglich im, insbesondere nichtflüchtigen, Speicher des Steuergeräts abgelegter Bestimmungs-Konfigurationsdatensatz zusammen mit den ebenfalls abgelegten datenübertragungssystem-spezifischen Validierungsdaten positiv überprüft werden, d.h. solange, bis im Schritt c) ein Übereinstimmen der empfangenen Validierungsdaten mit den abgelegten datenübertragungssystem-spezifischen Validierungsdaten festgestellt wird.

Sofern im Schritt c) ein derartiges Übereinstimmen der empfangenen Validierungsdaten mit den datenübertragungssystem-spezifischen Validierungsdaten festgestellt wird, erfolgt im Schritt
f) ein Ablegen des Bestimmungs-Konfigurationsdatensatzes im, insbesondere nichtflüchtigen, Speicher des Steuergeräts.

Auch nach dem Durchführen des Schrittes f) ist es denkbar, dass die Schritte a) bis c), insbesondere die Schritte b) bis c), insbesondere der Schritt c), in vorzugsweise regelmäßigen Abständen, wiederholt werden. Aufgrund des Wiederholens der Schritte a) bis c), insbesondere der Schritte b) bis c), insbesondere des Schrittes c), kann beispielsweise festgestellt werden, ob das Steuergerät noch mit dem ausgewählten Datenübertragungssystem verbunden ist. Auch Fehlerfälle, wie z.B. ein Timeout oder das Vorliegen einer beschädigten Datenbank bzw. Konfigurationstabelle aufgrund von Hardware-Fehlern bzw. Software-Fehlern, kann durch Wiederholen der genannten Schritte festgestellt werden.

Die eingangs genannte Aufgabe wird des Weiteren durch ein Steuergerät gemäß Anspruch 11 zur Nutzung in unterschiedlichen Datenübertragungssystemen, insbesondere in unterschiedlichen Datenübertragungssystemen in Fahrzeugen, gelöst, wobei das Steuergerät eine Datenbank umfasst, in der die Menge von Konfigurationsdatensätzen abgelegt ist, wobei mindestens ein Konfigurationsdatensatz zum Herstellen der Datenübertragung mit einem ausgewählten Datenübertragungssystem auswählbar ist.

Mit Hilfe des erfindungsgemäßen Steuergerätes ist die Durchführung eines zuvor beschriebenen erfindungsgemäßen Verfahrens möglich. Die vom Steuergerät umfasste Datenbank kann auch als Konfigurationstabelle bezeichnet werden. Die Konfigurationstabelle umfasst verschiedene Konfigurationsdatensätze, wobei jeweils einem Konfigurationsdatensatz eine bestimmte Konfiguration zugeordnet ist, mit welcher das Steuergerät im mit einem Datenübertragungssystem verbundenen Zustand betrieben werden kann.

Des Weiteren weist das Steuergerät einen, insbesondere nichtflüchtigen, Speicher auf, in dem der zu initialisierende Konfigurationsdatensatz ablegbar ist. Mit Hilfe der Datenbank und des insbesondere nichtflüchtigen Speichers kann beispielsweise folgender Verfahrensablauf durchgeführt werden:
Aus der Menge von Konfigurationsdatensätzen wird ein Konfigurationsdatensatz ausgewählt. Zur Auswahl eines Konfigurationsdatensatzes werden im Steuergerät Kodierdaten hinterlegt. Die Kodierdaten sind beispielsweise über eine Check-Summe und über eine hinterlegte Fahrgestellnummer abgesichert.

Das mit einem aus einer Vielzahl von Datenübertragungssystemen ausgewählten Datenübertragungssystem verbundene Steuergerät wird anschließend gestartet.

Der nichtflüchtige Speicher ist direkt bei dem Starten bzw. Aufstarten des Steuergerätes verfügbar. Der in dem Speicher abgelegte initialisierende Konfigurationsdatensatz wird abgerufen, so dass das Herstellen einer Datenübertragung zwischen dem ausgewählten Datenübertragungssystem und dem Steuergerät durch Initialisieren des Konfigurationsdatensatzes erfolgt. Vorzugsweise handelt es sich hierbei um den Bestimmungs-Konfigurationsdatensatz.

Es folgt das Überprüfen des initialisierten Konfigurationsdatensatzes, wobei das Steuergerät beispielsweise die Fahrgestellnummer des Fahrzeuges von dem Datenübertragungssystem empfängt und mit zuvor bestimmten und in einem Speicher des Steuergerätes abgelegten datenübertragungssystem-spezifischen Validierungsdaten vergleicht. Bei diesem Speicher kann es sich um einen separaten Speicher handeln oder um den gleichen Speicher, in dem auch der zu initialisierende Konfigurationsdatensatz abgelegt ist. Im Fehlerfall oder beim Feststellen eines Unterschiedes zwischen der empfangenen Fahrgestellnummer und der zuvor abgelegten datenübertragungssystem-spezifischen Fahrgestellnummer wird der initialisierende Konfigurationsdatensatz im nichtflüchtigen Speicher mit einem/dem Minimal-Konfigurationsdatensatz überschrieben.

Anschließend kann ein Neustart des Steuergerätes erfolgen. Bei der darauffolgenden Initialisierung eines Konfigurationsdatensatzes erfolgt die Initialisierung des Minimal-Konfigurationsdatensatzes. Auch bei einem Initialisieren des Minimal-Konfigurationsdatensatzes wird fortlaufend überprüft, ob die empfangene Fahrgestellnummer mit der abgelegten datenübertragungssystem-spezifischen Fahrgestellnummer übereinstimmt. Sofern dies der Fall ist, wird im Speicher der Bestimmungs-Konfigurationsdatensatz hinterlegt und beim darauffolgenden Neustart des Steuergerätes initialisiert.

Die eingangs genannte Aufgabe wird des Weiteren durch ein Datenübertragungssystem, insbesondere für ein Fahrzeugsystem, gelöst, das mindestens ein erfindungsgemäßes Steuergerät und ein Bussystem umfasst.

Das Bussystem kann beispielsweise einen FlexRay-Bus und/oder CAN-Bus und/oder LIN-Bus und/oder MOST-Bus und/oder ein Ethernet umfassen.

Die eingangs genannte Aufgabe wird des Weiteren durch ein Fahrzeug gelöst, das ein erfindungsgemäßes Steuergerät und/oder ein erfindungsgemäßes Datenübertragungssystem umfasst.

Nachfolgend wird die Erfindung mittels mehrerer Ausführungsbeispiele beschrieben, die anhand von Abbildungen näher erläutert werden.

Hierbei zeigen:
- Fig. 1: ein erfindungsgemäßes Steuergerät in einem ersten Datenübertragungssystem zur Durchführung des erfindungsgemäßen Verfahrens gemäß einer ersten Ausführungsform; und
- Fig. 2: das Steuergerät aus Fig. 1 in einem zweiten Datenübertragungssystem zur Durchführung des erfindungsgemäßen Verfahrens gemäß einer weiteren Ausführungsform.

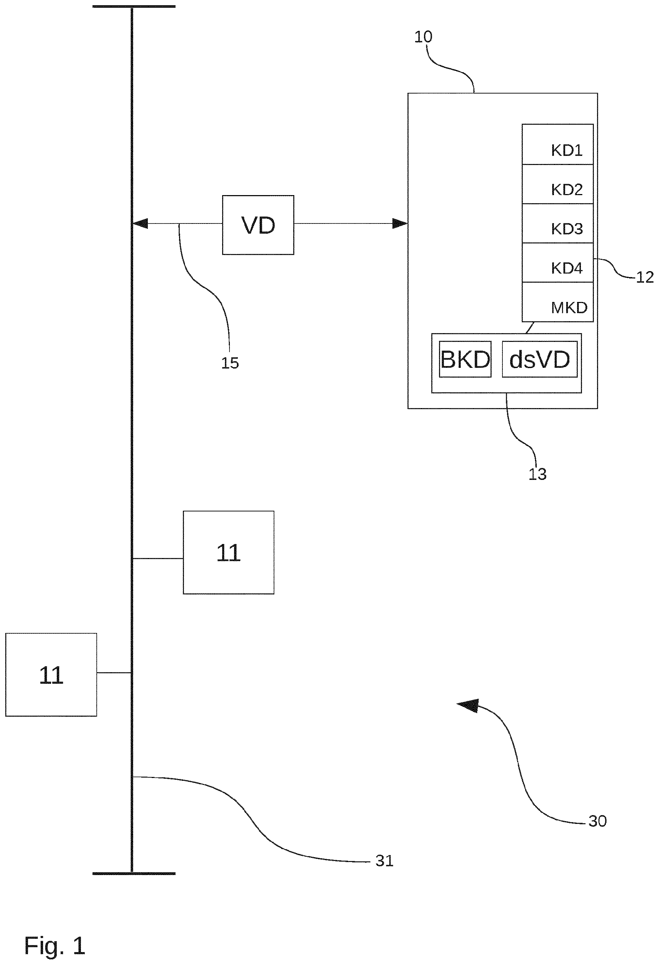

In Fig. 1 ist ein Datenübertragungssystem 30 dargestellt, das ein Bussystem 31 sowie ein erfindungsgemäßes Steuergerät 10 sowie zwei weitere Steuergeräte 11 umfasst. Das erfindungsgemäße Steuergerät 10 ist an das Bussystem 31, nämlich an einem FlexRay-Bus angeschlossen. Über das Bussystem 31 kann das erfindungsgemäße Steuergerät 10 Nachrichten senden und empfangen und so mit den anderen Steuergeräten 11 des Datenübertragungssystems 30 kommunizieren.

Das Steuergerät 10 umfasst eine Datenbank 12, in der eine Menge von Konfigurationsdatensätzen abgelegt ist. Im dargestellten Beispiel sind die Konfigurationsdatensätzen KD1, KD2, KD3 und KD4 sowie ein Minimal-Konfigurationsdatensatz MKD abgelegt. Es ist denkbar, dass in der Datenbank 12 eine geringere oder eine größe Anzahl von Konfigurationsdatensätzen abgelegt ist. Die Größe der zur Verfügung stehenden Datenbank bzw. des Datenbankspeichers schränkt die Anzahl der darin abgelegten Konfigurationsdatensätze ein. Das Steuergerät 10 kann demnach in fünf verschiedenen Konfigurationen betrieben werden. Abhängig von der Wahl des Datenübertragungssystems kann das Steuergerät 10 mit einer in der Datenbank 12 hinterlegten und für das ausgewählte Datenübertragungssystem passenden Konfiguration betrieben werden. Hierzu ist einer der fünf hinterlegten Konfigurationsdatensätze zu initialisieren.

Vorzugsweise mit dem Verbinden des Steuergeräts 10 mit dem Datenübertragungssystem 30 kann zur Auswahl des zum Datenübertragungssystem 30 passenden Konfigurationsdatensatzes eine Kodierung erfolgen. Hierzu werden in dem Speicher 13 Kodierdaten hinterlegt, die zum einen Auswahldaten zur Auswahl eines Bestimmungs-Konfigurationsdatensatzes BKD aus der Menge von Konfigurationsdatensätzen KD1, KD2, KD3, KD4 und MKD umfassen.

Des Weiteren umfassen die Kodierdaten datenübertragungssystem-spezifische Validierungsdaten dsVD, die ebenfalls in dem Speicher 13 des Steuergeräts 10 abgelegt werden. Bei dem Vorgang der Übertragung von Kodierdaten beim Anschließen des Steuergerätes 10 an das Datenübertragungssystem 30 handelt es sich um eine sogenannte Steckerkodierung.

Anschließend wird das Steuergerät 10, das mit dem Datenübertragungssystem 30 verbunden ist, gestartet. Zwischen dem Datenübertragungssystem 30 und dem Steuergerät 10 wird durch Initialisieren des Bestimmungs-Konfigurationsdatensatzes BKD eine Datenübertragung 15 hergestellt.

Es folgt das Überprüfen des initialisierten Konfigurationsdatensatzes, wobei es sich im vorliegenden Ausführungsbeispiel beim initialisierten Konfigurationsdatensatz um den initialisierten Bestimmungs-Konfigurationsdatensatz BKD handelt. Dieser wurde zuvor als passender Konfigurationsdatensatz ausgewählt und in dem Speicher 13 des Steuergeräts 10 abgelegt. Der Bestimmungs-Konfigurationsdatensatz BKD entspricht einem der Konfigurationsdatensätze KD1, KD2, KD3 oder KD4. Zum Überprüfen des initialisierten Bestimmungs-Konfigurationsdatensatzes BKD empfängt das Steuergerät Validierungsdaten VD des ausgewählten Datenübertragungssystems 30, wobei das Steuergerät 10 die empfangenen Validierungsdaten VD mit den zuvor bestimmten und in dem Speicher 13 des Steuergerätes 10 abgelegten datenübertragungssystem-spezifischen Validierungsdaten dsVD vergleicht.

Da das dargestellte Datenübertragungssystem 30 in einem Fahrzeug eingebaut ist, handelt es sich bei den datenübertragungssystem-spezifischen Validierungsdaten dsVD um die fahrzeugspezifische Fahrgestellnummer (VIN). Diese Fahrgestellnummer bzw. die datenübertragungssystem-spezifischen Validierungsdaten dsVD werden mit den empfangenen Validierungsdaten VD verglichen.

Wenn bei dem Überprüfen des initialisierten Konfigurationsdatensatzes BKD ein Übereinstimmen der empfangenen Validierungsdaten VD mit den datenübertragungssystem-spezifischen Validierungsdaten dsVD festgestellt wird, wird der initialisierte Konfigurationsdatensatz, der in diesem Fall der Bestimmungs-Konfigurationsdatensatz BKD ist, validiert, d.h. als gültig erklärt. Somit ist sichergestellt, dass sich das Steuergerät 10 im zum initialisierten Bestimmungs-Konfigurationsdatensatz BKD passenden Umfeld bzw. passenden Datenübertragungssystem 30 befindet. Der weitere Betrieb des Steuergerätes 10 erfolgt mit der durch den Bestimmungs-Konfigurationsdatensatz BKD vorgegebenen Konfiguration. Eine inkompatible Datenübertragung zwischen dem Steuergerät 10 und dem Datenübertragungssystem 30 wird durch das Überprüfen des initialisierten Konfigurationsdatensatzes verhindert.

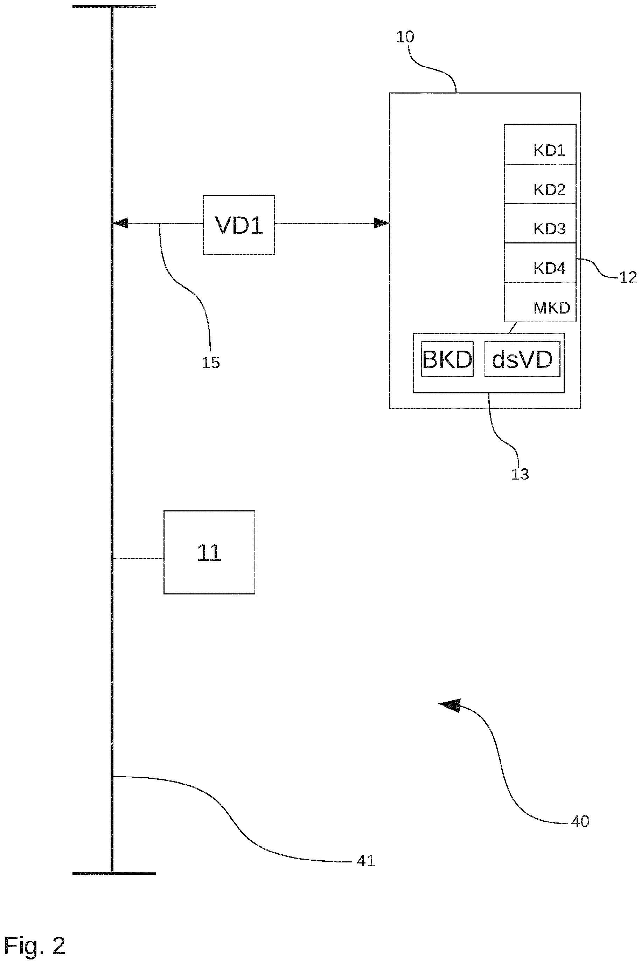

In Fig. 2 wird eine weitere Ausführungsform bezüglich des erfindungsgemäßen Verfahrens dargestellt. In diesem Fall wird das Steuergerät 10 der Fig. 1 vom Datenübertragungssystem 30 getrennt und mit dem Datenübertragungssystem 40 verbunden. Im Speicher 13 des Steuergerätes 10 ist weiterhin der Bestimmungs-Konfigurationsdatensatz BKD abgelegt, wie dieser für das Datenübertragungssystem 30 in Fig. 1 ausgewählt wurde. Außerdem sind im Speicher 13 die datenübertragungssystem-spezifischen Validierungsdaten dsVD aus der vorherigen Anwendung gemäß Fig. 1 gespeichert.

Bei dem Datenübertragungssystem 40 handelt es sich um einen Verbund aus einem Bussystem 41, bei dem es sich ebenfalls um einen FlexRay-Bus handelt und dem erfindungsgemäßen Steuergerät 10 sowie einem weiteren Steuergerät 11. Das Datenübertragungssystem 40 entspricht demnach nicht dem Datenübertragungssystem 30 der Fig. 1.

Das nunmehr mit dem Datenübertragungssystem 40 verbundene Steuergerät 10 wird in einem ersten Schritt gestartet. Direkt beim Starten bzw. Aufstart des Steuergerätes 10 ist der nichtflüchtige Speicher 13 bereits verfügbar. Es folgt das Herstellen einer Datenübertragung 15 zwischen dem ausgewählten Datenübertragungssystem 40 und dem Steuergerät 10 durch Initialisieren des im Speicher 13 abgelegten Bestimmungs-Konfigurationsdatensatzes. Anschließend erfolgt ein Überprüfen des initialisierten Bestimmungs-Konfigurationsdatensatzes BKD, wobei das Steuergerät 10 die Validierungsdaten VD1 des Datenübertragungssystems 40 empfängt und mit den im Speicher 13 des Steuergerätes 10 abgelegten datenübertragungssystem-spezifischen Validierungsdaten dsVD vergleicht.

Da das Steuergerät 10 nunmehr in einem anderen Fahrzeug verbaut ist und das Datenübertragungssystem 40 nicht mit dem Datenübertragungssystem 30 übereinstimmt, wird beim Überprüfen des initialisierten Konfigurationsdatensatzes BKD ein Unterschied zwischen den empfangenen Validierungsdaten VD1 und den datenübertragungssystem-spezifischen Validierungsdaten dsVD festgestellt. Bei den empfangenen Validierungsdaten VD1 handelt es sich beispielsweise um die Fahrgestellnummer des neuen Fahrzeuges, so dass diese Fahrgestellnummer nicht mit der als datenübertragungssystem-spezifischen Validierungsdaten abgespeicherten Fahrgestellnummer übereinstimmt.

Nach dem Feststellen dieses Unterschiedes erfolgt ein Ablegen des Minimal-Konfigurationsdatensatzes MKD in dem Speicher 13 des Steuergerätes 10. Somit wird der Minimal-Konfigurationsdatensatz als zu initialisierender Konfigurationsdatensatz definiert.

Das Ablegen des Minimal-Konfigurationsdatensatzes MKD in dem Speicher 13 kann des Weiteren in folgenden Fällen erfolgen:
- wenn die Überprüfung des initialisierten Konfigurationsdatensatzes nicht innerhalb einer zuvor bestimmten Zeitdauer durchgeführt wird und/oder
- wenn die Datenbank 12 des Steuergerätes 10 beschädigt ist und/oder
- wenn die datenübertragungssystem-spezifischen Validierungsdaten dsVD nicht erkannt werden können.

Bei einem darauffolgenden Initialisieren des Minimal-Konfigurationsdatensatzes MKD wird das Steuergerät 10 in einem Minimal-Datenübertragungsmodus gestartet bzw. betrieben, wobei in diesem Minimal-Datenübertragungsmodus beispielsweise eine Diagnose-Datenübertragung und/oder eine Ausgabe einer Fehlermeldung erfolgen kann.

Im einfachsten Fall verhindert der Minimal-Datenübertragungsmodus eine inkompatible Kommunikation bzw. inkompatible Datenübertragung. Eine Minimal-Anforderung an das Steuergerät ist dann ein derartiger Betrieb, dass die Datenübertragung im restlichen Datenübertragungssystem 40 derart erfolgt, als ob das Steuergerät 10 nicht verbaut wäre.

Im in Fig. 2 dargestellten Ausführungsbeispiel kann bei jedem Starten des Steuergerätes 10 das Initialisieren des Minimal-Konfigurationsdatensatzes MKD sowie das Überprüfen des initialisierten Minimal-Konfigurationsdatensatzes MKD wiederholt werden. Sofern das Steuergerät 10 allerdings im Datenübertragungssystem 40 eingebaut bleibt, wird eine derartige Überprüfung nicht positiv verlaufen.

Sofern das Steuergerät 10 wieder in ein Datenübertragungssystem 30 der Fig. 1 zurückverbaut wird, ist es denkbar, dass zwar beim ersten Starten des Steuergerätes 10 mit dem ausgewählten Datenübertragungssystem 30 der Minimal-Konfigurationsdatensatz MKD initialisiert wird. Beim Überprüfen des initialisierten Minimal-Konfigurationsdatensatzes kann allerdings dann festgestellt werden, dass die empfangenen Validierungsdaten VD mit den im Speicher 13 abgelegten datenübertragungssystem-spezifischen Validierungsdaten dsVD übereinstimmen. Das Steuergerät 10 stellt fest, dass die empfangenen Validierungsdaten mit den ursprünglichen Kodierdaten übereinstimmen. Im nichtflüchtigen Speicher 13 wird dann wieder der Bestimmungs-Konfigurationsdatensatz BKD hinterlegt und als zu initalisierender Konfigurationsdatensatz definiert, so dass in einem darauffolgenden Starten des Steuergerätes 10 und dem zugehörigen Initialisieren eines Konfigurationsdatensatzes das Steuergerät 10 in der für das ausgewählte Datenübertragungssystem 30 passenden Konfiguration betrieben wird.

Aufgrund des erfindungsgemäßen Steuergerätes 10 und/oder des erfindungsgemäßen Verfahrens zur Nutzung eines Steuergerätes 10 in unterschiedlichen Datenübertragungssystemen (30; 40) wird die Anzahl von Steuergeräte-Varianten minimiert.

Die einzelnen beschriebenen Ausführungsbeispiele lassen sich in verschiedenen Weisen erfindungsgemäß kombinieren.

### Bezuaszeichenliste

- 10: Steuergerät
- 11: weiteres Steuergerät
- 12: Datenbank
- 13: Speicher
- 15: Datenübertragung
- 30: Datenübertragungssystem
- 31: Bussystem
- 40: Datenübertragungssystem
- 41: Bussystem
- KD1, KD2, KD3, KD4: Konfigurationsdatensätze
- MKD: Minimal-Konfigurationsdatensatz
- BKD: Bestimmungs-Konfigurationsdatensatz
- dsVD: datenübertragungssystem-spezifische Validierungsdaten
- VD, VD1: Validierungsdaten

## Patentansprüche

1. Verfahren zur Nutzung eines Steuergerätes (10) in unterschiedlichen Datenübertragungssystemen (30; 40), insbesondere in unterschiedlichen Datenübertragungssystemen (30; 40) in Fahrzeugen, wobei das Steuergerät (10) eine Datenbank (12) umfasst, in der eine Menge von Konfigurationsdatensätzen (KD1; KD2; KD3; KD4; MKD) abgelegt ist, umfassend die Schritte:
a) Starten des Steuergeräts (10), das mit einem aus einer Vielzahl von Datenübertragungssystemen ausgewählten Datenübertragungssystem (30; 40) verbunden ist;
b) Herstellen einer Datenübertragung (15) zwischen dem ausgewählten Datenübertragungssystem (30; 40) und dem Steuergerät (10) durch Initialisieren eines Konfigurationsdatensatzes aus der Menge von Konfigurationsdatensätzen (KD1; KD2; KD3; KD4; MKD) im Steuergerät,
**gekennzeichnet durch**:
c) Überprüfen des initialisierten Konfigurationsdatensatzes, wobei das Steuergerät (10) Validierungsdaten (VD; VD1) des ausgewählten Datenübertragungssystems (30; 40) empfängt und mit zuvor bestimmten und in einem Speicher (13) des Steuergerätes (10) abgelegten datenübertragungssystem-spezifischen Validierungsdaten (dsVD) vergleicht;
d) Validieren des initialisierten Konfigurationsdatensatzes, wenn im Schritt c) ein Übereinstimmen der empfangenen Validierungsdaten (VD, VD1) mit den datenübertragungssystem-spezifischen Validierungsdaten (dsVD) festgestellt wird;
e) Ablegen eines Minimal-Konfigurationsdatensatzes (MKD) in einem Speicher des Steuergeräts (10) und Definieren des Minimal-Konfigurationsdatensatzes als zu initiierender Konfigurationsdatensatz, wenn im Schritt c) ein Unterschied zwischen den empfangenen Validierungsdaten (VD, VD1) und den datenübertragungssystem-spezifischen Validierungsdaten (dsVD) festgestellt wird, wobei beim Initialisieren des Minimal-Konfigurationsdatensatzes (MKD) ein Minimal-Datenübertragungsmodus des Steuergerätes (10) gestartet wird, wobei im Minimal-Datenübertragungsmodus eine Diagnose-Datenübertragung erfolgt und/oder eine Ausgabe einer Fehlermeldung erfolgt und/oder eine Datenübertragung innerhalb des Datenübertragungssystems (30; 40) derart erfolgt, als ob das Steuergerät (10) nicht verbaut wäre.

2. Verfahren nach Anspruch 1, wobei die datenübertragungssystem-spezifischen Validierungsdaten (dsVD) von zuvor bestimmten und in einem/dem Speicher (13) des Steuergeräts (10) abgelegten Kodierdaten umfasst werden.

3. Verfahren nach Anspruch 2, wobei die Kodierdaten Auswahldaten zur Auswahl eines Bestimmungs-Konfigurationsdatensatzes (BKD) aus der Menge von Konfigurationsdatensätzen (KD1; KD2; KD3; KD4; MKD) umfassen.

4. Verfahren nach Anspruch 3, wobei im Schritt b) der in einem/dem Speicher (13) des Steuergeräts (10) abgelegte Bestimmungs-Konfigurationsdatensatz (BKD) initialisiert wird.

5. Verfahren nach einem der Ansprüche 1 bis 3, wobei im Schritt b) ein, von der Menge von Konfigurationsdatensätzen (KD1; KD2; KD3; KD4; MKD) umfasster, Minimal-Konfigurationsdatensatz (MKD) initialisiert wird.

6. Verfahren nach einem der vorangegangenen Ansprüche, wobei im Schritt c) das ausgewählte Datenübertragungssystem (30; 40) die Fahrgestellnummer des Fahrzeugs an das Steuergerät (10) sendet.

7. Verfahren nach einem der Ansprüche 2 bis 6, wobei das Bestimmen der Kodierdaten vor dem Schritt a), insbesondere vor dem Verbinden des Steuergeräts (10) mit dem ausgewählten Datenübertragungssystem (30; 40) oder durch das Verbinden des Steuergeräts mit dem ausgewählten Datenübertragungssystem (30), erfolgt.

8. Verfahren nach einem der vorangegangenen Ansprüche, zudem umfassend das Wiederholen der Schritte a) bis c), insbesondere der Schritte b) bis c), insbesondere des Schrittes c), nach dem Durchführen des Schrittes e).

9. Verfahren nach einem der Ansprüche 3, 4 und, sofern die Ansprüche 5-8 von Ansprüchen 3 oder 4 abhängen, nach einem der Ansprüche 5-8, zudem umfassend das f) Ablegen des Bestimmungs-Konfigurationsdatensatzes (BKD) im, insbesondere nichtflüchtigen, Speicher (13) des Steuergeräts (10) und Definieren des Bestimmungs-Konfigurationsdatensatzes (BKD) als zu initialisierender Konfigurationsdatensatz, wenn im Schritt c) ein Übereinstimmen der empfangenen Validierungsdaten (VD; VD1) mit den datenübertragungssystem-spezifischen Validierungsdaten (dsVD) festgestellt wird.

10. Verfahren nach Anspruch 9, zudem umfassend das Wiederholen der Schritte a) bis c), insbesondere der Schritte b) bis c), insbesondere des Schrittes c), nach dem Durchführen des Schrittes f).

11. Steuergerät (10) zur Nutzung in unterschiedlichen Datenübertragungssystemen (30; 40), insbesondere in unterschiedlichen Datenübertragungssystemen (30; 40) in Fahrzeugen, umfassend Mittel zur Ausführung der Schritte des Verfahrens nach einem der Ansprüche 1 bis 10, sowie
- eine Datenbank (12), in der die Menge von Konfigurationsdatensätzen (KD1; KD2; KD3; KD4) sowie der Minimal-Konfigurationsdatensatz (MKD) abgelegt ist, wobei der initialisierende Konfigurationsdatensatz zum Herstellen der Datenübertragung (15) mit dem ausgewählten Datenübertragungssystem (30; 40) aus der Menge von Konfigurationsdatensätzen (KD1; KD2; KD3; KD4) sowie dem Minimal-Konfigurationsdatensatz (MKD) auswählbar ist, und
- einen, insbesondere nichtflüchtigen, Speicher (13), in dem der initialisierende Konfigurationsdatensatz nach der Auswahl abgelegt ist.

12. Datenübertragungssystem (30; 40), insbesondere für ein Fahrzeug, umfassend mindestens ein Steuergerät (10) nach Anspruch 11 und ein Bussystem (31; 41).

13. Datenübertragungssystem (30; 40) nach Anspruch 12, wobei das Bussystem (31; 41) ein FlexRay-Bus oder CAN-Bus oder LIN-Bus oder MOST-Bus oder Ethernet ist.

14. Fahrzeug, umfassend ein Steuergerät (10) nach Anspruch 11 und/oder ein Datenübertragungssystem (30; 40) nach Anspruch 12 oder 13.

## Claims

1. Method for using a control device (10) in different data transmission systems (30; 40), in particular in different data transmission systems (30; 40) in vehicles, the control device (10) comprising a database (12) which stores a set of configuration data records (KD1; KD2; KD3; KD4; MKD), comprising the steps of:
a) starting the control device (10) which is connected to a data transmission system (30; 40) selected from a multiplicity of data transmission systems;
b) establishing data transmission (15) between the selected data transmission system (30; 40) and the control device (10) by initializing a configuration data record from the set of configuration data records (KD1; KD2; KD3; KD4; MKD) in the control device,
**characterized by**
c) checking the initialized configuration data record, the control device (10) receiving validation data (VD; VD1) relating to the selected data transmission system (30; 40) and comparing said data with previously determined data transmission system-specific validation data (dsVD) stored in a memory (13) of the control device (10);
d) validating the initialized configuration data record if it is determined, in step c), that the received validation data (VD, VD1) match the data transmission system-specific validation data (dsVD);
e) storing a minimum configuration data record (MKD) in a memory of the control device (10) and defining the minimum configuration data record as the configuration data record to be initiated if a difference between the received validation data (VD, VD1) and the data transmission system-specific validation data (dsVD) is determined in step c), a minimum data transmission mode of the control device (10) being started when initializing the minimum configuration data record (MKD), diagnostic data transmission being carried out and/or an error message being output in the minimum data transmission mode, and/or data transmission being carried out inside the data transmission system (30; 40) as if the control device (10) were not installed.

2. Method according to Claim 1,
the data transmission system-specific validation data (dsVD) being included in previously determined coding data stored in a/the memory (13) of the control device (10).

3. Method according to Claim 2,
the coding data comprising selection data for selecting a determination configuration data record (BKD) from the set of configuration data records (KD1; KD2; KD3; KD4; MKD).

4. Method according to Claim 3,
in step b), the determination configuration data record (BKD) stored in a/the memory (13) of the control device (10) being initialized.

5. Method according to one of Claims 1 to 3,
in step b), a minimum configuration data record (MKD) included in the set of configuration data records (KD1; KD2; KD3; KD4; MKD) being initialized.

6. Method according to one of the preceding claims,
in step c), the selected data transmission system (30; 40) transmitting the chassis number of the vehicle to the control device (10).

7. Method according to one of Claims 2 to 6,
the determination of the coding data being carried out before step a), in particular before connecting the control device (10) to the selected data transmission system (30; 40) or by connecting the control device to the selected data transmission system (30).

8. Method according to one of the preceding claims, also comprising
repeating steps a) to c), in particular steps b) to c), in particular step c), after carrying out step e) .

9. Method according to either of Claims 3 and 4 and, if Claims 5-8 are dependent on Claim 3 or 4, according to one of Claims 5-8,
also comprising
f) storing the determination configuration data record (BKD) in the memory (13), in particular the non-volatile memory, of the control device (10) and defining the determination configuration data record (BKD) as the configuration data record to be initialized if it is determined, in step c), that the received validation data (VD; VD1) match the data transmission system-specific validation data (dsVD).

10. Method according to Claim 9,
also comprising
repeating steps a) to c), in particular steps b) to c), in particular step c), after carrying out step f) .

11. Control device (10) for use in different data transmission systems (30; 40), in particular in different data transmission systems (30; 40) in vehicles, comprising means for carrying out the steps of the method according to one of Claims 1 to 10, and
- a database (12) which stores the set of configuration data records (KD1; KD2; KD3; KD4) and the minimum configuration data record (MKD), the initializing configuration data record being able to be selected from the set of configuration data records (KD1; KD2; KD3; KD4) and the minimum configuration data record (MKD) for the purpose of establishing data transmission (15) with the selected data transmission system (30; 40), and
- a memory (13), in particular a non-volatile memory, which stores the initializing configuration data record after selection.

12. Data transmission system (30; 40), in particular for a vehicle, comprising at least one control device (10) according to Claim 11 and a bus system (31; 41) .

13. Data transmission system (30; 40) according to Claim 12,
the bus system (31; 41) comprising a FlexRay bus or a CAN bus or a LIN bus or a MOST bus or Ethernet.

14. Vehicle comprising a control device (10) according to Claim 11 and/or a data transmission system (30; 40) according to Claim 12 or 13.

## Revendications

1. Procédé pour exploiter un appareil de commande (10) dans différents systèmes de transmission de données (30 ; 40), en particulier dans différents systèmes de transmission de données (30 ; 40) dans des véhicules, dans lequel l'appareil de commande (10) comprend une base de données (12) dans laquelle sont mémorisés de multiples jeux de données de configuration (KD1 ; KD2 ; KD3 ; KD4 ; MKD), comprenant les étapes consistant à :
a) démarrer l'appareil de commande (10), qui est relié à un système de transmission de données (30 ; 40) sélectionné parmi une pluralité de systèmes de transmission de données ;
b) réaliser une transmission de données (15) entre le système de transmission de données (30 ; 40) sélectionné et l'appareil de commande (10) par initialisation d'un jeu de données de configuration parmi les multiples jeux de données de configuration (KD1 ; KD2 ; KD3 ; KD4 ; MKD) dans l'appareil de commande,
**caractérisé par** les étapes consistant à :
c) vérifier le jeu de données de configuration initialisé, dans lequel l'appareil de commande (10) reçoit des données de validation (VD ; VD1) du système de transmission de données (30 ; 40) sélectionné et les compare avec des données de validation (dsVD) spécifiques au système de transmission de données, déterminées au préalable et mémorisées dans une mémoire (13) de l'appareil de commande (10) ;
d) valider le jeu de données de configuration initialisé lorsqu'à l'étape c), une concordance des données de validation (VD, VD1) reçues avec les données de validation spécifiques au système de transmission de données (dsVD) est établie ;
e) stocker un jeu de données de configuration minimal (MKD) dans une mémoire de l'appareil de commande (10) et définir le jeu de données de configuration minimal comme étant un jeu de données de configuration à initialiser lorsqu'à l'étape c), une différence entre les données de validation (VD, VD1) reçues et les données de validation spécifiques au système de transmission de données (dsVD) est établie, dans lequel, lors de l'initialisation du jeu de données de configuration minimal (MKD), un mode de transmission de données minimal de l'appareil de commande (10) est démarré, dans lequel, dans le mode de transmission de données minimal, une transmission de données de diagnostic est effectuée et/ou une émission d'un message d'erreur est effectuée et/ou une transmission de données au sein du système de transmission de données (30 ; 40) est effectuée comme si l'appareil de commande (10) n'était pas installé.

2. Procédé selon la revendication 1, dans lequel les données de validation spécifiques au système de transmission de données (dsVD) sont comprises dans des données de codage préalablement déterminées et mémorisées dans une mémoire (13) de l'appareil de commande (10).

3. Procédé selon la revendication 2, dans lequel les données de codage comprennent des données de sélection permettant de sélectionner un jeu de données de configuration de détermination (BKD) parmi les multiples jeux de données de configuration (KD1 ; KD2 ; KD3 ; KD4 ; MKD).

4. Procédé selon la revendication 3, dans lequel,
à l'étape b), le jeu de données de configuration de détermination (BKD) mémorisé dans une/la mémoire (13) de l'appareil de commande (10) est initialisé.

5. Procédé selon l'une des revendications 1 à 3, dans lequel,
à l'étape b), un jeu de données de configuration minimal (MKD) compris dans les multiples jeux de données de configuration (KD1; KD2 ; KD3 ; KD4 ; MKD) est initialisé.

6. Procédé selon l'une des revendications précédentes, dans lequel,
à l'étape c), le système de transmission de données (30 ; 40) sélectionné transmet le numéro de châssis du véhicule à l'appareil de commande (10).

7. Procédé selon l'une des revendications 2 à 6, dans lequel
la détermination des données de codage est effectuée avant l'étape a), en particulier avant que l'appareil de commande (10) soit relié au système de transmission de données (30 ; 40) sélectionné ou en reliant l'appareil de commande au système de transmission de données (30) sélectionné.

8. Procédé selon l'une des revendications précédentes, comprenant en outre la répétition des étapes a) à c), en particulier des étapes b) à c), en particulier de l'étape c), après que l'étape e) a été effectuée.

9. Procédé selon l'une des revendications 3, 4 et, lorsque les revendications 5 à 8 dépendent des revendications 3 ou 4, selon l'une des revendications 5-8, comprenant en outre les étapes consistant à f) mémoriser le jeu de données de configuration de détermination (BKD) dans la mémoire (13), en particulier non volatile, de l'appareil de commande (10) et définir le jeu de données de configuration de détermination (BKD) comme étant un jeu de données de configuration à initialiser lorsqu'à l'étape c), une concordance des données de validation reçues (VD ; VD1) avec les données de validation spécifiques au système de transmission de données (dsVD) est établie.

10. Procédé selon la revendication 9,
comprenant en outre la répétition des étapes a) à c), en particulier des étapes b) à c), en particulier de l'étape c), après que l'étape f) a été effectuée.

11. Appareil de commande (10) destiné à être exploité dans différents systèmes de transmission de données (30 ; 40), en particulier dans différents systèmes de transmission de données (30 ; 40) dans des véhicules, comprenant des moyens permettant d'exécuter les étapes du procédé selon l'une des revendications 1 à 10, et
- une base de données (12) dans laquelle sont mémorisés les multiples jeux de données de configuration (KD1 ; KD2 ; KD3 ; KD4) ainsi que le jeu de données de configuration minimal (MKD), dans lequel le jeu de données de configuration d'initialisation peut être sélectionné parmi les multiples jeux de données de configuration (KD1 ; KD2 ; KD3 ; KD4) et le jeu de données de configuration minimal (MKD) pour réaliser la transmission de données (15) avec le système de transmission de données (30 ; 40) sélectionné, et
- une mémoire (13), en particulier non volatile, dans laquelle est mémorisé le jeu de données de configuration d'initialisation après la sélection.

12. Système de transmission de données (30 ; 40), en particulier pour un véhicule, comprenant au moins un appareil de commande (10) selon la revendication 11 et un système de bus (31 ; 41).

13. Système de transmission de données (30 ; 40) selon la revendication 12, dans lequel
le système de bus (31 ; 41) est un bus FlexRay ou un bus CAN ou un bus LIN ou un bus MOST ou Ethernet.

14. Véhicule comprenant un appareil de commande (10) selon la revendication 11 et/ou un système de transmission de données (30 ; 40) selon la revendication 12 ou 13.
